# EUROPEAN PATENT APPLICATION

(11) **EP 1 209 327 A2**
(43) Date of publication of application: **29.05.2002**
(21) Application number: 01127191.3
(22) Date of filing: 16.11.2001
(51) Int. Cl.: F01L 1/34, F16K 3/00

(54) **Hydraulically damped low friction solenoid operated valve**

(30) Priority: 21.11.2000 US 717920
(71) Applicant: EATON CORPORATION, Cleveland, Ohio 44114-2584 (US)
(72) Inventor: Dayton, Robert Andrew, Attica, Michigan 48412 (US); Bennett, Larry Paul, Franklin, Michigan 48025 (US)
(74) Representative: Patentanwälte Rüger, Barthelt & Abel

(57) **Abstract**

A solenoid operated pressure control valve of the spool type having a pressure equalization passage through the spool for pressure balancing. The passage has a restrictive metering orifice for providing viscous dampening of the spool movement with the area of the orifice, less than about 1/50^{th} of the spool area. The armature is cantilevered from one end of the spool to eliminate the need for armature bearings and thus reduces friction and hysteresis.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### MICROFICHE APPENDIX

Not Applicable

### BACKGROUND OF THE INVENTION

The present invention relates to solenoid operated valves of the type which utilize a spool for controlling flow from a pressurized supply port to a signal outlet port by bleeding fluid from the valving chamber to a vent or return to the sump.

Valves of the aforesaid type have been found to be particularly useful in applications for operation at low voltage for controlling fluid in the hydraulic shifting circuit of an automatic power transmission employed in a motor vehicle. In such applications, it is necessary to minimize the volume or bulk of the solenoid to accommodate installation on the transmission and to minimize the current required to effect operation of the valve, inasmuch as the valve is intended to be controlled from an electronic microcomputer circuit such as that employed for controlling the vehicle motor.

Furthermore, in automotive transmission shift control applications, problems have been encountered with solenoid operated valves due to pressure transients in the supply pressure and hydraulic load circuit resulting in instability of the valve and erratic control of the fluid flow through the valve over the pressure range required for operation of the fluid operated device.

Heretofore, solenoid operated spool valves employed in automotive applications have been of the pressure balanced type and thus with a relatively low force required to move the spool; however, these have been subject to instability or erratic oscillation when the valving land on the spool was in a position substantially closing the supply port. In applications where the valve was employed in a system having little or no resiliency to the fluid pressure, e.g., a very high hydraulic "spring rate" in the load circuit connected to the control signal or operating flow port, this problem has been exacerbated.

Additionally, problems have been encountered in the design of solenoid operated pressure control spool valves in providing a construction wherein the armature is slidably disposed with minimal friction forces to thereby minimize hysteresis in the operation of the valve. This has been found to be particularly troublesome where the pressure balanced spool is biased in one direction by a very light spring load; and, where the valve is intended to be actuated with a minimum of ampere turns excitation of the solenoid, the friction forces of the support bearings for the armature will have a significant effect on the valve operation.

Thus, it has long been desired to provide a way or means of providing a pressure balanced solenoid operated fluid pressure control valve which is resistant to instability and erratic valve and armature movement and has minimal friction forces operating against movement of the valve spool. It has further been desired to provide such a valve which is relatively low in manufacturing costs and reliable and robust in applications such as the environment encountered in automotive power transmission control installations.

### BRIEF SUMMARY OF THE INVENTION

The present invention provides a solution to the above-described problem of designing a solenoid operated pressure balanced spool valve which is resistant to instability and oscillations and which is capable of operating over a broad pressure range with a minimum of ampere turns of electrical energization.

The present invention provides a solenoid operated spool valve having a pressure inlet port, a control signal outlet port and a vent or dump port for providing a pressure control signal to the signal outlet port over a varying range of pressures for controlling a fluid operated device connected to the signal control output port.

The valve of the present invention has a fluid pressure balancing passage through the spool which connects the opposite ends thereof; and, the pressure balancing passage has a fluid metering orifice therein which serves to provide viscous fluid dampening of the motion of the spool. The armature of the present valve is disposed in cantilever from the end of the valve spool and is therefore not subject to friction forces from any alignment or support bearings thus reducing hysteresis.

The present invention thus provides a solenoid operated pressure balance spool valve which is capable of providing precise control of a fluid pressure outlet signal over a broad range of pressures and is particularly stable at reduced pressures where the spool is in a position substantially closing the supply port.

### BRIEF DESCRIPTION OF THE DRAWINGS

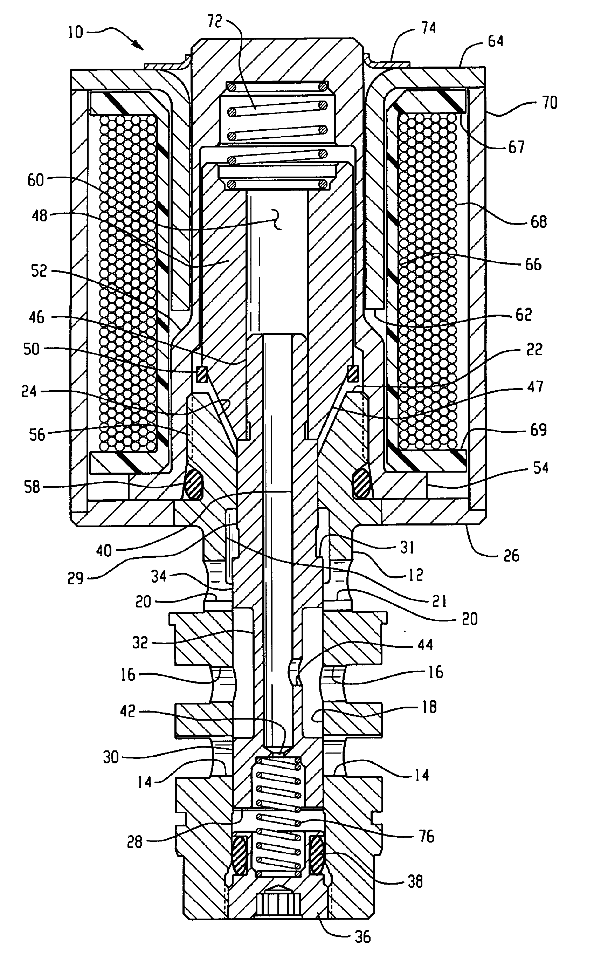

The sole drawing of the present invention comprises a cross-section through the longitudinal axis of the spool of the valve of the present invention.

### DETAILED DESCRIPTION OF THE INVENTION

Referring to the drawing, the valve assembly of the present invention is indicated generally at 10 and has a body 12 formed of a generally cylindrical hollow configuration having a plurality of inlet ports 14 at a common axial station therealong which inlet ports are adapted to for connection to a source (not shown) of fluid pressure. In one application of the invention, for which the valve has been found particularly suitable, the ports 14 are adapted to be connected to a source of hydraulic fluid from a pump in an automotive power transmission.

Valve body 12 has at least one pressure control signal outlet port 16 spaced axially from inlet port 14 along a valving bore 18 formed in the valve body. Port 16 is adapted for connection to a fluid pressure operated device, such as, for example, a hydraulic shift control actuator circuit for an automotive power transmission.

Valving bore 18 also communicates with vent ports 20 disposed axially spaced from the signal port 16 on the side thereof remote from inlet port 14.

The upper end of body 12 has formed thereon a magnetically permeable flux collector or pole piece 22 through which extends the valving passage 18 and which opens in a chamfer 24 formed on the upper end thereof. The flux collector 22 has disposed thereon preferably by press fit or weldment a radially outwardly extending annular flange 26 which comprises a flux collector or ring of magnetically permeable material.

Valving bore 18 has slidably received therein a spool 28 which has a first annular valving land 30 formed at the lower end thereof for controlling flow through inlet or supply port 14 to the valving bore 18. The spool member 28 has a circumferential groove 32 formed therein. The groove 32 is in continuous communication with the control signal output ports 16 irrespective of the position of the spool member 28 and groove 32 extends axially along the spool to a second annular valving land 34.

Valving land 34 is located on the spool at an axial station therealong so as to control the flow of fluid from the groove 32 to the sump or return port 20.

Valving bore 18 is closed at its lower end by a suitable plug 36 threadedly received in the end thereof and sealed by a resilient seal ring 38. Plug 36 has registered thereagainst the lower end of a coil spring 76, the upper end of which is registered against the end of spool 28 and biases the spool in an upward direction.

Spool 28 has a pressure balancing passage 40 extending therethrough from the lower end to the upper end. Passage 40 has formed therein, preferably adjacent the lower end thereof, a fluid metering orifice 42 which restricts flow of fluid through the passage 40 during axial movement of the spool. In the present practice of the invention, for a spool 28 having a diameter of about 6.0 millimeters, as metering orifice having a diameter of about 1.0 millimeter has been found satisfactory for applications where automotive automatic transmission fluid is the fluid to be controlled with the valve of the present invention. It will be understood however, that with other fluids and different spool size, the metering orifice will have a different size according to the size of the spool employed. In the present practice of the invention the metering orifice 42 is sized according to the transverse sectional area of the spool such that the spool area As is at least about fifty (50) times the area A₀ of the metering orifice, e.g., A_{S}/A₀ ≥50, and preferably A_{S}/A₀ = 58.

The pressure balancing passage 40 communicates with the groove 32 by means of a cross port 44 formed in the spool between the axial edges of the groove 32; and, port 44 communicates the passage 40 continuously with the pressure control outlet ports 16. Thus, the pressure in the outlet port 16 is the pressure that is provided in the passage 40 and which is applied to the opposite ends of the spool 28.

Spool 28 has a stepped or intermediate reduced diameter portion 29 which provides a slightly reduced transverse area to the spool in this region. The pressure forces acting on the ends of the spool are thus imbalanced by virtue of the annular area of the step 31 between the diameter of portion 29 and the diameter of lands 34, 30, thereby providing a slight "hydraulic bias" on the spool in an upward direction or direction tending to close inlet port 14.

The valve body has an annular undercut 21 formed in bore 18 in the axial region of portion 29 which insures that the annular step 31 is continuously exposed to the reduced fluid pressure in exhaust passage 20.

The upper end of the spool 28 extends axially outwardly of the bore 18 and chamfer 24; and, spool 28 has a further reduced diameter portion 46 which has received thereon, preferably in press fitting engagement, a tubular or annular armature member 48 which is formed of magnetically permeable material. The lower end of armature 48 is tapered annularly to correspond to the chamfer 24 and pole piece 22. An annular limit stop 50 is disposed about the armature to prevent the armature from closing the annular air gap between taper 47 and chamfer 24 upon downward movement of the armature.

A tubular cover member 52 having the upper end thereof closed is disposed over the armature and has a flange 54 formed about the lower or open end thereof, which flange is registered against the flux ring 26; and, cover 52 is threadedly engaged on the pole piece by threads 56 provided about the upper end thereof. A resilient seal ring 58 is disposed between the lower end of the cover 52 and the pole piece 22 and provides a fluid pressure tight seal therebetween for sealing the chamber 60 formed within the cover which chamber communicates with the upper end of the pressure balancing passage 40. It will be understood that the spool 28 and the cover 52 are formed of non-magnetic material.

A flux collector tube 62 is received over the armature cover 52 and has a radially outwardly extending flange 64 provided on the upper end thereof. A bobbin 66 is disposed over the flux tube 62 and cover 52 and is disposed axially between cover flange 54 and tube flange 64. The bobbin has a coil of electrically conductive material, as for example magnet wire, wound thereabout as denoted by reference numeral 68, between bobbin and flanges 67, 69.

An outer annular casing 70 is received over the bobbin and coil and extends between flux collector ring 26 and flange 64 of flux collector tube 62. Casing 70 is formed of magnetically permeable material and thus completes the flux loop about coil 68.

A spring 72 disposed within cover 52 and has the upper end thereof registered against the closed end of the cover with the lower end thereof registered against the upper end of armature 48 thereby biasing the armature in a downward direction. It will be understood that armature 48 and spool 28 are thus balanced between the opposing forces of springs 76 and 72 in a calibrated arrangement. The flux collector tube 62 and the coil and bobbin are retained on the cover by a suitable retaining ring 74 which, in the presently preferred practice is press fitted over cover 52.

The present invention thus provides a solenoid operated pressure control valve having a pressure balanced spool with the movement of the spool and armature damped by a metering orifice within the pressure equalization passage which restricts the flow of fluid therethrough during movement of the spool to thus minimize oscillations of the spool, particularly when the spool land is in a position substantially closing the pressure inlet port. The armature is cantilevered from the end of the spool and requires no bearings and thus the friction on the movement of the spool and armature is substantially reduced.

Although the invention has hereinabove been described with respect to the illustrated embodiments, it will be understood that the invention is capable of modification and variation and is limited only by the following claims.

## Claims

1. An electrically operated valve comprising:
(a) a valve body having an inlet port, a signal pressure outlet port, an exhaust port and a valving bore communicating with said ports;
(b) a spool valve member slidably received in said bore and moveable therein for controlling flow between said inlet port and said exhaust and signal ports, said spool having a pressure equalizing passage extending axially therethrough said passage including a restricting orifice limiting flow therethrough during armature movement;
(c) a magnetically permeable armature attached to an end of said spool extending from said bore;
(d) a cover disposed for closing said valving bore and covering said armature;
(e) a solenoid coil disposed over said cover; and,
(f) magnetically permeable structure completing a flux loop about said coil.

2. The valve defined in claim 1, wherein said spool is slidably guided in said bore and said armature is cantilevered from the end of said spool.

3. The electrically operated valve defined in claim 1, wherein said armature is attached to said spool in a press-fitted engagement.

4. The valve defined in claim 1, wherein said magnetically permeable structure includes a portion of said body operable to define a working air gap with said armature.

5. The valve defined in claim 4, wherein said armature includes a non-magnetic stop portion operative to contact said magnetically permeable structure to limit the closing of said air gap.

6. The valve defined in claim 4, wherein said magnetically permeable structure includes an annular flux collector with a radially outwardly extending flange, said flux collector received over said cover.

7. The valve defined in claim 4, wherein said magnetically permeable structure includes a conically tapered pole piece formed on an end of said body.

8. The valve defined in claim 4, wherein said magnetically permeable structure includes an annular flange extending radially outwardly from said body.

9. The valve defined in claim 4, wherein said magnetically permeable structure includes an annular member attached to one end of said body.

10. A method of making an electrically operated valve comprising:
(a) forming a valving bore in a valve body and porting said bore therealong with an inlet, signal outlet and exhaust ports;
(b) disposing a spool valve member in said bore and moving said valve in said bore and controlling flow therewith between the inlet, outlet and exhaust ports and extending an end of said spool axially outwardly of said bore;
(c) securing a magnetically permeable armature to said outwardly extending portion;
(d) covering said armature and closing said bore; and,
(e) disposing a solenoid coil about said cover and disposing magnetically permeable pole structure about said coil and completing a flux loop thereabout, and forming a working air gap between said armature and said pole structure.

11. The method defined in claim 10, wherein said step of securing said armature includes press fitting.

12. The method defined in claim 10, wherein said step of disposing a spool includes forming at least two annular lands on said spool and disposing said lands in said bore in closely fitting arrangement.

13. The method defined in claim 10, wherein said step of forming a working air gap includes forming a conically tapered surface on said pole structure and forming a corresponding conically tapered surface on said armature.

14. The method defined in claim 10, wherein said step of disposing magnetically permeable pole structure about said coil includes attaching an annular flange to said body.

15. The method defined in claim 14, wherein said step of attaching includes press fitting.

16. The method defined in claim 10, wherein said step of ending a portion of said spool includes cantilevering said armature from said spool.
